Europäisches Patentamt

European Patent Office

Office européen des brevets

(19)

(11) **EP 1 592 250 A1**

(12) **EUROPEAN PATENT APPLICATION**

(43) Date of publication:
**02.11.2005 Bulletin 2005/44**

(51) Int Cl.⁷: **H04N 7/01**

(21) Application number: **04010301.2**

(22) Date of filing: **30.04.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71) Applicant: **MATSUSHITA ELECTRIC INDUSTRIAL
CO., LTD.
Kadoma-shi, Osaka 571-8501 (JP)**

(72) Inventors:
• **Landsiedel, Thilo
63110 Rodgau (DE)**

• **Werner, Lothar
63110 Rodgau (DE)**

(74) Representative: **Grünecker, Kinkeldey,
Stockmair & Schwanhäusser Anwaltssozietät
Maximilianstrasse 58
80538 München (DE)**

Remarks:
Amended claims in accordance with Rule 86 (2)
EPC.

(54) **Film-mode detection in video sequences**

(57)     The present invention enables to determine a film mode characteristic for individual image areas in order to appropriately reflect local image characteristics. By detecting the image characteristics on a local basis, a picture improvement processing achieves better results as artefacts due to the application of a wrong global improvement processing are avoided.

Fig. 5

**Description**

The present invention relates to an improved film mode detection. In particular, the present invention relates to a method for detecting film mode in a sequence of video images and a corresponding film mode detector.

The present invention is employed in picture improvement algorithms which are used, in particular, in digital signal processing of modern television receivers. Specifically, modern television receivers perform a frame-rate conversion, especially in form of a up-conversion using frame repetition or a motion compensated up-conversion, for increasing the picture quality of the reproduced images. Motion compensated up-conversion is performed, for instance, for video sequences having a field or frame frequency of 50 Hz to higher frequencies like 60 Hz, 66.67 Hz, 75 Hz, 100 Hz, etc. While the 50 Hz input signal frequency mainly applies to a television signal broadcast based on the PAL or SECAM standard, NTSC based video signals have an input frequency of 60 Hz. A 60 Hz input video signal may be up-converted to higher frequencies like 72 Hz, 80 Hz, 90 Hz, etc.

During up-conversion, intermediate images are to be generated which reflect the video content at positions in time which are not represented by the 50 Hz or 60 Hz input video sequence. For this purpose, the motion of objects has to be taken into account in order to appropriately reflect the changes between subsequent images caused by the motion of objects. The motion of objects is calculated on a block basis, and motion compensation is performed based on the relative temporal position of the newly generated image between the previous and subsequent image.

For a motion vector determination, each image is divided into a plurality of blocks. Each block is subjected to motion estimation in order to detect a shift of an object from the previous image.

In contrast to interlaced video signals like PAL or NTSC signals, motion picture data is composed of complete frames. The most widespread frame rate of motion picture data is 24 Hz (24p). When converting motion picture data for display on a television receiver (this conversion is called telecine), the 24 Hz frame rate is converted into an interlaced video sequence by employing a "pull down" technique.

For converting motion picture film into an interlaced signal conforming to the PAL standard, having a field rate of 50 Hz (50i), a 2-2 pull down technique is employed. The 2-2 pull down technique generates two fields out of each film frame, while the motion picture film is played at 25 frames per second (25p). Consequently, two succeeding fields contain information originating from the same frame and representing the identical temporal position of the video content, in particular of moving objects.

When converting motion picture film into an interlaced signal conforming to the NTSC standard, having a field rate of 60 Hz (60i), the frame rate of 24 Hz is converted into a 60 Hz field rate employing a 3-2 pull down technique. This 3-2 pull down technique generates two video fields from a given motion picture frame and three video fields from the next motion picture frame.

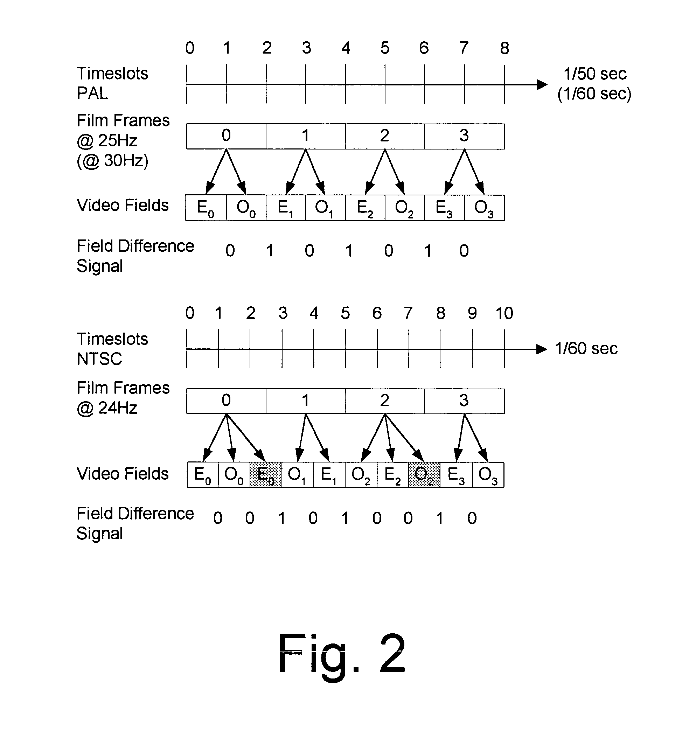

The telecine conversion process for generating interlaced video sequences in accordance with different television standards is illustrated in Fig. 2. The employed pull down techniques result in video sequences which include pairs or triplets of adjacent fields reflecting an identical motion phase. A field difference, for distinguishing a telecine signal from an interlaced image sequence, can only be calculated between fields, which stem from different film frames.

For picture improvement processing, the temporal position reflected by each field in a sequence of interlaced video images does not need to be taken into account if the image content does not include moving objects. However, if moving objects are present in the fields to be processed, the individual motion phase of each field needs to be taken into account. Thus, a picture improvement processing requires information indicating the motion characteristic of the individual fields, i.e. whether each field reflects an individual motion phase or whether a pull down technique has been employed, such that subsequent fields reflect identical motion phases.

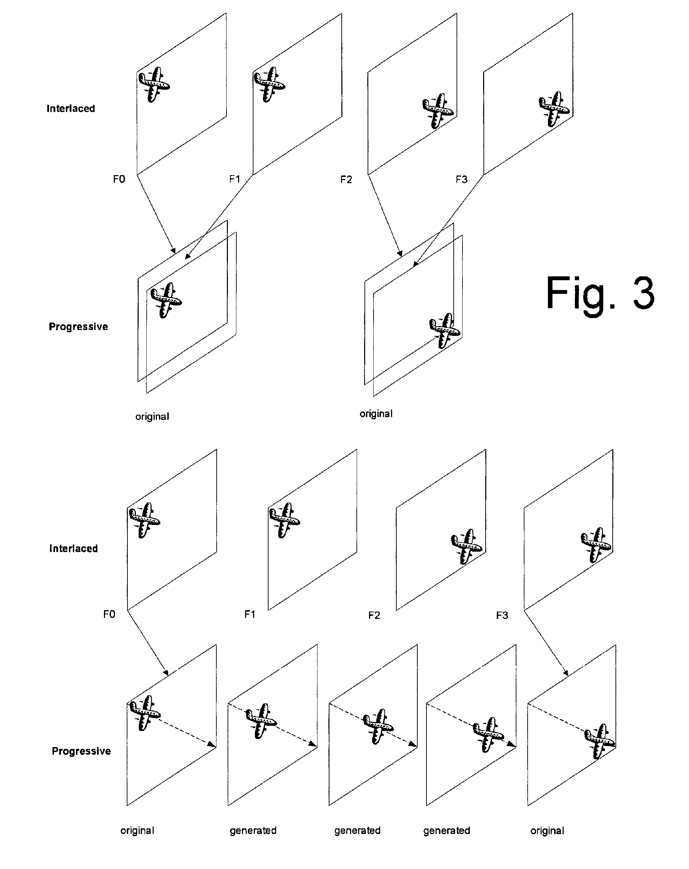

Examples for picture improvement processing are illustrated in Fig. 3. The example depicted on top of Fig. 3 illustrates the generation of progressive image data from two fields representing the same motion phase. Such processing is based on the knowledge of subsequent fields representing an identical motion phase, which may result from a telecine process. A picture quality improvement is only achieved if it can reliably be detected whether or not images of an input video sequence stem from a telecine conversion process and those two images are identified which belong to the same motion phase.

The second example depicted at the bottom of Fig. 3 illustrates the generation of continuous motion of a moving object when converting an interlaced sequence of images which stem from a telecine process and have a given field frequency into a an image sequence of another image frequency. When identifying those images of the input image sequence which belong to the same motion phase, intermediate output images reflecting respective motion phases can be generated.

A known method for detecting film mode and a film mode detector are described, for instance, in EP-A-1 198 137.

The detection of a picture repetition mode for individual image objects in field sequences is known from WO-A-02/056597. A plurality of objects is segmented in consecutive fields, wherein each object is defined by a single motion model.

US-A-2001/026328 describes the encoding of video sequences by applying two different encoding modes. The encoding switches between both encoding modes upon detection of film-type image sequences. For this purpose, a structure of five frames (10 fields) is analysed to detect the specific 3:2 pull-down pattern. In order to be able to differentiate between both modes for individual image objects, the detection is pixel-based by analysing successive pixel-two-pixel differences between successive field, wherein the differences are determined between fields of the same parity and switching the encoding accordingly.

Reference WO-A-99/16251 describes the detection of picture repetition patterns like a 3:2 and 2:2 pull-down pattern of movie material based on a motion vector decision for the respective images or image parts. While at least motion vectors are estimated for a particular image part, the decision of the best motion vectors thereof is used for the repetitive pattern detection.

The present invention aims to further improve a film mode detection and to provide an improved method of film mode detection and an improved film mode detector.

This is achieved by the features of the independent claims.

It is the particular approach of the present invention to perform film mode detection individually for image areas of the total image. In this manner, the film mode characteristic of an image can be determined as a local characteristic of image portions. Consequently, mixed mode images which include image content stemming from different sources like motion picture, still or video insertions, overlay portions etc. can be accurately processed. The present invention enables to adapt a picture improvement processing to the local characteristics of individual image areas. The video images are divided into a plurality of blocks and the film mode detection is performed on a block basis. Accordingly, the film mode characteristic can be determined for each block individually.

Preferably, the film mode detection is based on motion detection. By evaluating the motion between image areas at corresponding positions in subsequent images, film mode can be accurately detected.

Most preferably, the motion detection is based on the calculation and combination of pixel differences between image areas at corresponding positions in subsequent images.

Preferably, motion is detected when an accumulated pixel difference exceeds a predefined threshold. Most preferably, the threshold is set variably. In this manner, the motion detection can be adjusted to the image content or the noise present in the images.

The threshold is preferably set in accordance with the size of a previously determined accumulated pixel difference for the respective image area position. Most preferably, the previously calculated pixel difference is multiplied with a predetermined coefficient value. Accordingly, the threshold can be set accurately in a simple manner.

Preferably, a particular motion pattern from a plurality of pre-stored motion patterns is determined. By providing a set of predetermined motion patterns, a particular film mode pattern can be detected and the particular motion phase of a detected film mode determined.

Preferably, the pre-stored motion patterns include the motion patterns resulting from different telecine conversion patterns like 2-2 or 3-2.

In order to avoid a frequent switch from and to film mode detection, the switch is delayed such that a switch from and to film mode is only effected upon detecting a predefined number of identical mode determinations.

Preferably, the determined results are stored in a memory, in particular the determined film mode indication and the detected motion pattern are memorized. In this manner, a reliable film mode indication can be performed in a simple manner.

Preferably, the video sequence is an interlaced video sequence and the images are subjected to vertical filtering before performing a film mode detection. Accordingly, an erroneous motion detection between subsequent fields caused by the different positions of neighbouring lines in subsequent top and bottom fields is avoided and the accuracy of the film mode detection is correspondingly improved.

Preferably, an additional video mode detection is performed. If the film mode indication determined based on the video mode and film mode determinations do not correspond, the video mode determination is prioritized over the film mode determination.

Preferably, the video mode determination is based on a detection of a continuous motion pattern for image areas at corresponding positions in subsequent fields.

Preferably, the film mode determination is based on the detection of one of a plurality of pre-stored motion patterns for image areas at corresponding positions in subsequent images. A motion pattern indicates a motion phase of the current image area together with a particular motion phase scheme. In this manner, the individual position of each image area within a particular pull down scheme can be determined.

Preferably, the motion phase for the current image area is determined based on a motion pattern detected for an image area at a corresponding position in a previous image if motion pattern determination fails for the current image area. In this manner, a picture quality degradation during image improvement processing can be prevented when individual failures of film mode determinations occur.

Preferred embodiments of the present invention are the subject matter of dependent claims.

Other embodiments and advantages of the present invention will become more apparent from the following description of preferred embodiments, in which:

Fig. 1      illustrates a division of a video image into a plurality of blocks of uniform size,

Fig. 2      illustrates the conversion of motion picture images into an interlaced sequence of images in accordance with the PAL and NTSC television broadcast standard,

Fig. 3      illustrates two examples for picture improvement processing based on interlaced images stemming from motion picture data,

Fig. 4      illustrates an example of a mixed mode video image including image portions from multiple sources,

Fig. 5      illustrates an example configuration for a block based film mode detector in accordance with the present invention,

Fig. 6      illustrates an example for a block based film mode detection result,

Fig. 7      illustrates neighbouring pixel positions in top and bottom fields of an interlaced video sequence,

Fig. 8      illustrates the generation of a raster neutral position for fields of an interlaced video sequence,

Fig. 9a      illustrates an example segmentation of a video image into a plurality of blocks and the data determined and stored with respect to each of the blocks,

Fig. 9b      illustrates an example for a block size determination, and enlargement by predefined portions,

Fig. 10      illustrates a film mode detection based on a motion pattern analysis,

Fig. 11      illustrates a video mode detection based on motion pattern analysis,

Fig. 12      illustrates an example configuration for a still mode detector,

Fig. 13      illustrates an example detection result for the input video image shown in Fig. 4,

Fig. 14      illustrates an example of pre-stored motion patterns and corresponding motion phases for film mode detection, and

Fig. 15      illustrates an example for a step wise film mode erosion.

The present invention relates to digital signal processing, especially to signal processing in modern television receivers. Modern television receivers employ up-conversion algorithms in order to increase the reproduced picture quality and increase the display frequency. For this purpose, intermediate images are to be generated from two subsequent images. For generating an intermediate image, the motion of objects has to be taken into account in order to appropriately adapt the object position to the point of time reflected by the compensated image.
The present invention is preferably used in display units or image enhancer devices. Video signal processing is inherently necessary to drive progressive displays in order to avoid interlaced line flicker and to reduce large area flicker by employing higher frame rates. Further, the resolution is enhanced for SD (Standard Definition) signals for display on HDTV display devices.
The detection of motion picture film, which was subjected to a telecine process (further referred to as film-mode), is crucial for a picture improvement processing. For instance, an image enhancement may be achieved by interlaced/progressive conversion (I/P). For this purpose, an inverse telecine processing is performed by re-interleaving even and odd fields. In case of a 3-2 pull down conversion (as illustrated in the bottom example of Fig. 2), the single redundant field can be eliminated. The redundant repetition of a video field during 3-2 pull down conversion is marked by the grey coloured fields in Fig. 2.
More advanced up-conversion algorithms employ motion estimation and vector interpolation. The output frame rate may be an uneven fraction of the input frame rate. For instance an up-conversion from 60 Hz to 72 Hz corresponds to a ratio of 5 to 6. During such a conversion, only every 6th output frame can be generated from a single input field, when generating a continuous impression of the motion of a moving object.

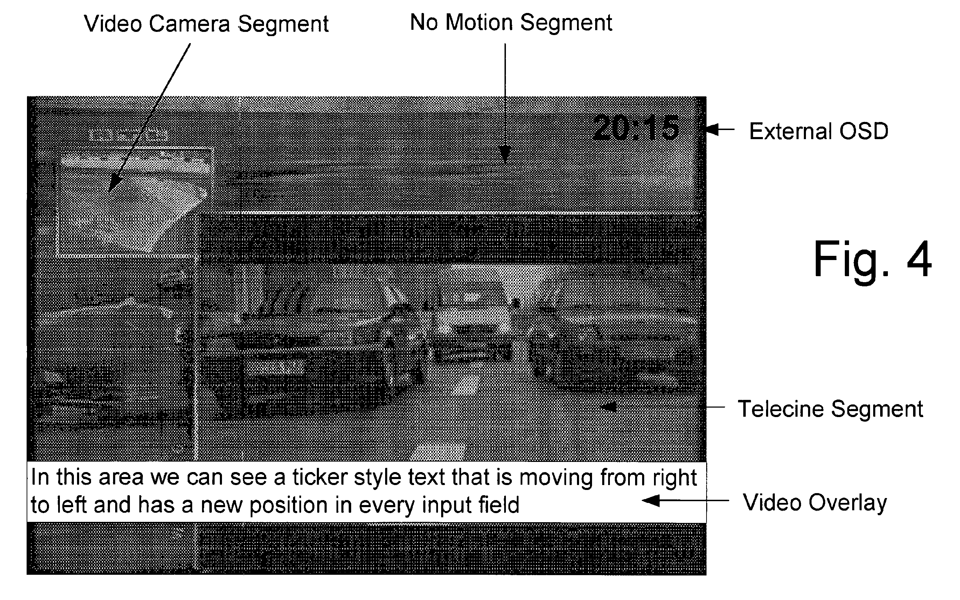

While prior art film mode detectors only evaluate an entire image for film mode detection, the film mode characteristic might, however, differ for different portions within the image. In particular, mixed mode images are composed from video sources providing different types of image data. These mixed mode sequences mainly consist of three types of image content: still or constant areas (e.g. logo, background, OSD), video camera areas (e.g. news ticker, video inserts/overlay), and film mode areas (e.g. main movie, PIP). In particular, new encoding schemes such as MPEG-4 allow a combination of image data originating from different sources within a single re-assembled image as shown, for instance, in Fig. 4 in a simple manner. Thus, a single field may comprise data originating from motion picture film, from a video camera source and/or from computer generated scenes.

Conventional film mode detectors always detect the "predominant mode" covering only the mode present for the biggest part of the image. Such conventional detectors may cause errors in the reproduced image, as a motion compensator does not take the characteristics of smaller image portions into account. Consequently, a reverse telecine processing applied to a complete image will cause artefacts in those image areas which do not stem from motion picture film.

Further, a single image may contain image portions originating from a 2-2 pull down of a 30 Hz computer animation and, in addition, a 3-2 pull down segment. If two different types of film mode occur in a single image, the respective image portions have to be processed differently during image improvement processing.

A different processing is also required when image portions stemming from a regular 2-2 pull down and other image portions stemming from an inverse 2-2 pull down are present in the same image, wherein the inverse 2-2 pull down images have an inverse order of the odd and even fields.

It is the particular approach of the present invention to divide each image into a plurality of blocks and to perform film mode detection on a block basis. Thus, the characteristics of a video sequence are determined on a block basis and a picture improvement processing based thereon can achieve an improved picture quality.

For film mode detection, three subsequent raster neutral luminance (Y) input fields are required. Raster neutrality enables a comparison of adjacent fields of opposite parity.

A motion value is calculated based on pixel differences for each of the blocks. A single motion bit indicates whether or not motion has been detected. Based on a sequence of motion bits, a pattern analysis is performed in order to determine the presence and position of a pull down pattern.

Based on the determination result, a motion compensator performs motion compensation on a block basis wherein the motion (based on the motion vector), the detected mode (film mode, video mode, still) and the individual motion phase are taken into account.

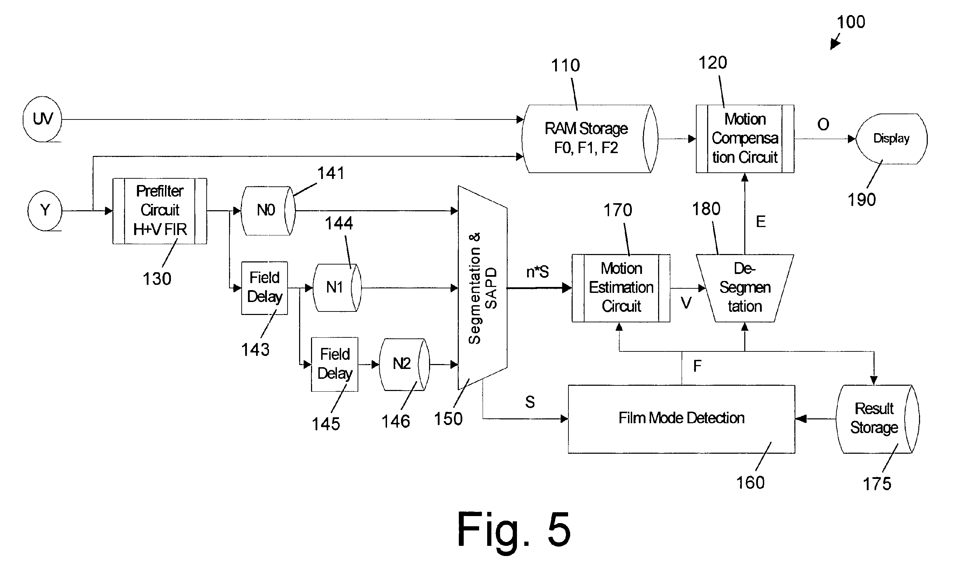

An example configuration for a block based film mode detector is illustrated in Fig. 5. The input video signal (i.e. the active portion thereof) is applied to a RAM memory 110. The memory 110 has a storage capacity of three fields to store subsequent fields F0, F1 and F2. While fields F0 and F2 have the same parity and raster position, field F1 has the opposite parity and raster position.

The luminance information Y of the input video signal is passed through a pre-filter circuit 130 generating a raster neutral, low pass filtered image signal N0. The pre-filtering prevents vertical differences caused by different raster positions of subsequent fields to be misinterpreted as motion. The pre-filtered luminance component N0 is stored in memory 141, delayed twice by field delay means 143, 145 and stored as image signal N1 delayed by one field period in memory 144 and as image signal N2 delayed by two field periods in memory 146.

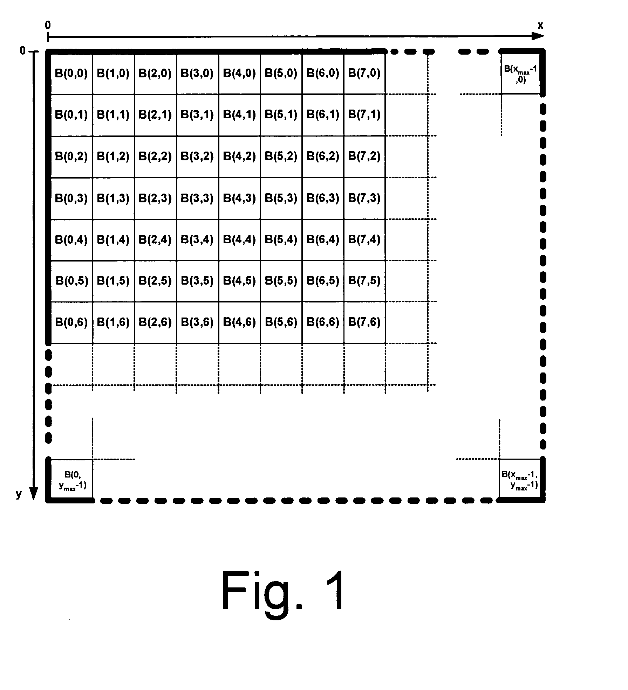

The input image is divided into a plurality of blocks in accordance with the predefined block raster as illustrated, for instance, in Fig. 1. Preferably, each image comprises 90 blocks in horizontal direction and 60 blocks for NTSC video sequences and 72 blocks for PAL video sequences in vertical direction.

Between blocks at corresponding positions in subsequent images, a sum of absolute pixel differences SAPD is calculated. Depending on the accumulation result, motion is detected to be present between two subsequent blocks.

The image segmentation and the calculation of absolute pixel differences is performed in segmentation & SAPD unit 150. Two SAPD values are calculated for identical block positions between image data of fields N0 and N1 and, in addition, between fields N1 and N2.

The calculated SAPD values (S) for identical block positions are applied to film mode detection unit 160. Film mode detection unit 160 respectively compares the accumulated differences to an adaptive threshold. Depending on the comparison result, a motion bit is set to 1 if the threshold is exceeded and motion detected, otherwise to 0.

The threshold value to be compared with the SAPD motion values for motion detection is set to a value based on the image content. In this manner, small SAPD motion values are taken into account and evaluated based on a relative motion difference.

The motion bits determined from blocks of subsequent fields at a corresponding position are compared to pre-stored typical telecine patterns like 101 or 10010. If a telecine pattern is detected, film mode is determined for the respective image segment. If not, the respective image segment is determined to be in video mode.

Further, film mode detection unit 160 analyses the current motion pattern in order to determine the motion phase of a current image segment within the determined pull down scheme.

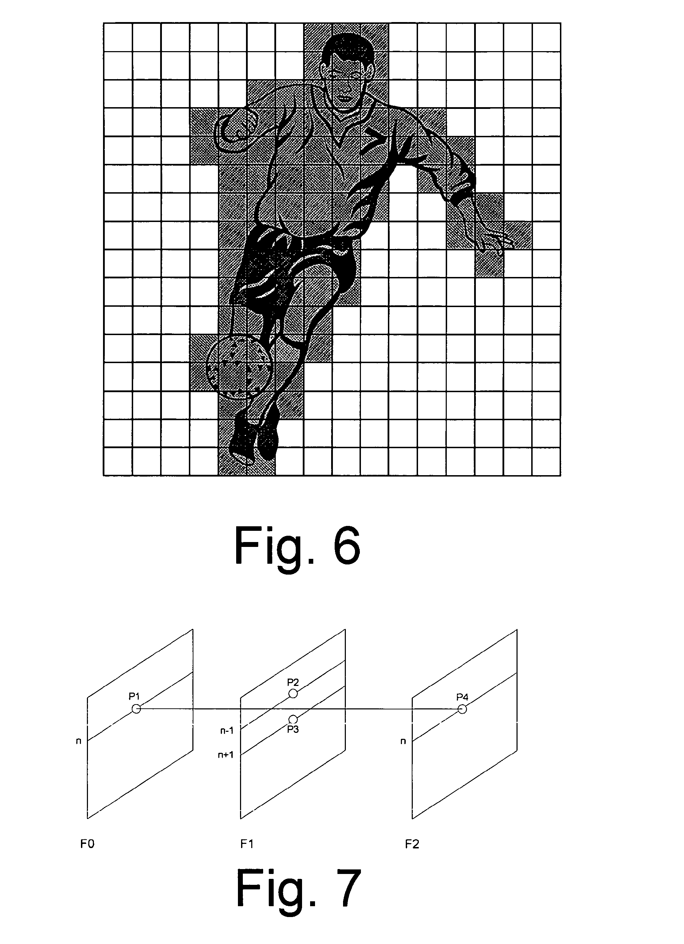

An example of a film mode detection result for a complete image is shown in Fig. 6.

The film mode detection result is stored for each block. As illustrated in Fig. 5 the determined film mode indication (F) is, on the one hand, forwarded to motion estimation circuit 170 and, on the other hand, provided to memory 175 for use during film mode determination of subsequent images.

The motion estimation circuit 170 additionally receives motion values from segmentation & SAPD unit 150 as temporal and spatial predictors for determining motion vectors.

The film mode detection result F together with the motion phase information and a motion vector V determined by motion estimation circuit 170 are applied to a de-segmentation circuit 180. De-segmentation circuit 180 correlates the results from each image segment and performs segment erosion, preferably by applying a two step processing. Accordingly, an increased resolution and smoothened transitions E are achieved and applied to motion compensation circuit 120.

Motion compensation circuit 120, in particular as part of an interlaced/progressive conversion unit, selects from memory 110 the respective image data for providing an improved output image signal (O) for display on display device 190.

If the film mode detection determines that the position of an image object does not differ between two subsequent fields and the output image position is represented by an input image position, an inverse telecine processing (i.e. a re-interleaving) is performed. However, if subsequent fields relate to different motion phases or the output image position is not represented by an input image position, image processing for the respective image segment is performed in form of a motion vector based compensation for both, film mode and video mode image segments.

The video signal applied to the film mode detector of the present invention and in particular to the motion compensation interlaced/progressive converter unit, is preferably in accordance with the CCIR-601 standard format YUV-4:2:2. The interlaced video signal is subjected to pre-filtering in order to generate a raster neutral image. As illustrated in Fig. 7, the even and odd lines of neighbouring fields contain image information at different vertical positions (P1 and P4 as opposed to P2 and P3), which may result in a miss-detection of motion. In order to avoid such motion miss-detection, a raster neutral position is calculated in advance by interpolating even fields to a half line downwards shifted vertical position and odd fields to a half line upwards shifted position.

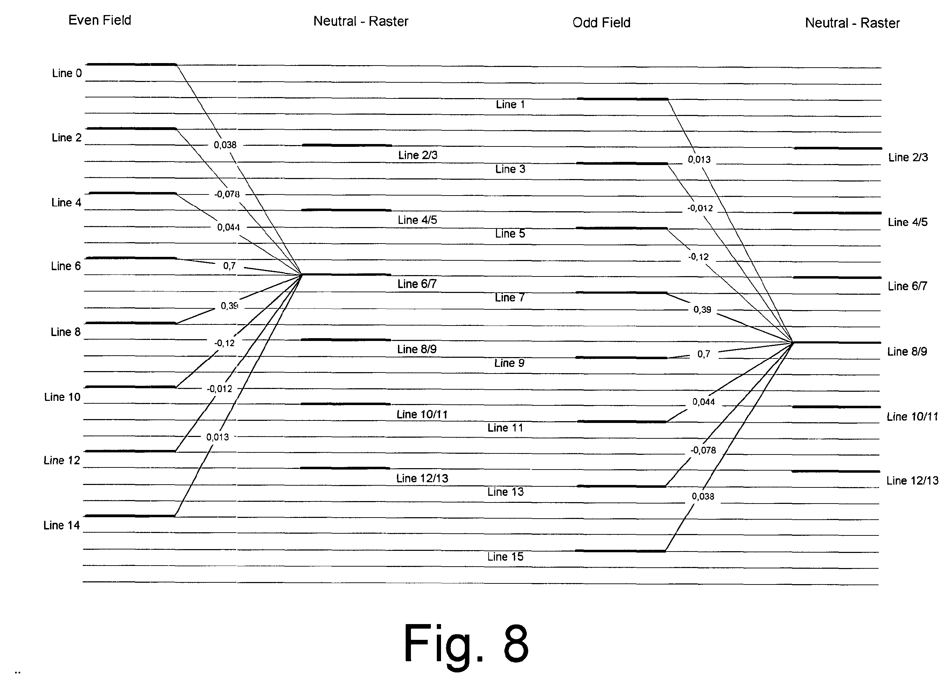

The preferred embodiment for such a vertical pre-filtering is an 8-tap FIR filter with inverted coefficients for each field type, i.e. top and bottom field. An example for an 8-tap FIR filter for generating a raster neutral position for subsequent fields is illustrated in Fig. 8. It is to be noted that progressive type image input sequences do not require a respective pre-processing for film-mode detection.

The block size of m*n pixels is adapted to the image format. Preferably, the block is rectangular wherein the number of pixels in horizontal direction is twice as large as the number of pixels in vertical direction. For instance, a block may have a block size of 8*4 pixels. It is to be noted that after interlaced/progressive conversion, the rectangular block size will adopt a square format.

As described above, the image segmentation & SAPD unit 150 of Fig. 5 accumulates absolute pixel differences for each block by subtracting the pixel values of two adjacent fields for the same spatial position $P_{x,y}$ and accumulating the absolute differences for each block individually.

In order to eliminate the influence of video noise, only differences are allowed to contribute to the accumulated absolute pixel difference which exceed a predefined pixel threshold PT. The following equation expresses the accumulation performed for an image area in subsequent fields N0 and N1:

$$SAPD_{01} = \sum_{x=0}^{2m} \sum_{y=0}^{2n} \left( \left| P_{x,y}(N0) - P_{x,y}(N1) \right| \right) \quad if \left| P(N0) - P(N1) \right| > PT$$

Respective SAPD values are also calculated between fields N1/N2 and between fields N0/N2.

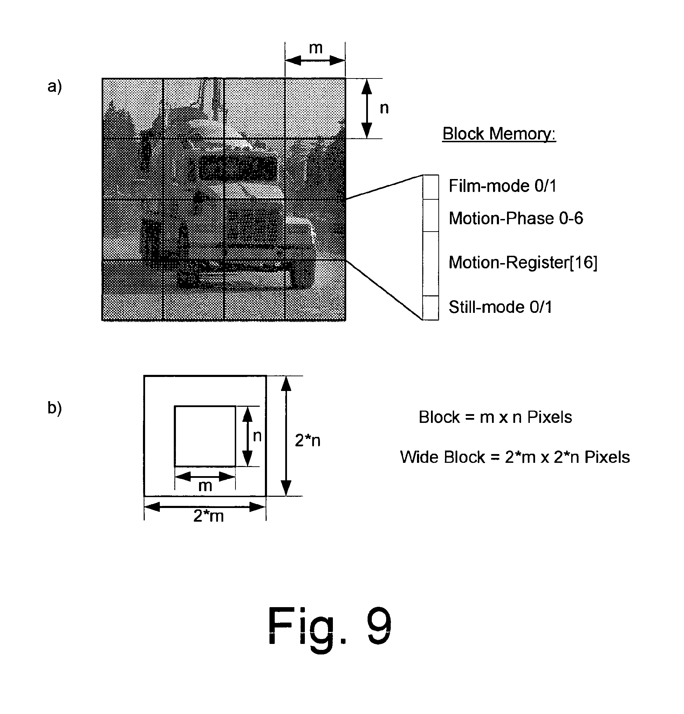

In order to avoid that image details are part of adjacent blocks and processed differently, the block size is preferably enlarged in order to take image details of neighbouring blocks into account for film mode determination. Preferably, the block dimensions are doubled in both, vertical and horizontal direction such that a block size of 2m*2n is employed. This is illustrated in Fig. 9b.

The value $SAPD_{01}$ of the above equation represents the absolute motion value for a current block calculated between fields N0 and N1. Based on the calculated absolute motion value, a telecine characteristic is detected. For this purpose, the calculated absolute motion value $SAPD_{01}$ is compared to a threshold value. Preferably, the threshold value is adaptive in order to also achieve reliable results when only little motion is present.

The threshold may be either set externally or, preferably, the threshold value is determined based on the previously selected motion value $SAPD_{12}$ between previous fields and N1 and N2. It is the particular advantage of this approach that the threshold is automatically set to an appropriate value.

The SAPD value of telecine material has the characteristic of a repetitive motion/no-motion alternation. The size of the SAPD value, which is calculated between fields of different motion phases, is an order of magnitude larger than the SAPD value calculated between fields representing the identical motion phase. An accurate motion/no-motion determination is adversely affected by image influences from an MPEG-coding/decoding, from noise, and unfortunate pre-filter residues (e.g. overshoot from a filter function). In order to enable a reliable motion detection, the previous motion value $SAPD_{12}$ is multiplied by a predetermined quantisation operator QM. The quantisation operator QM is preferably set between values of 1 and 2.

The motion detection employing an adaptive threshold is expressed by the following equation:

$$Motionbit = (SAPD_{01} > QM * SAPD_{12})$$

Accordingly, a motion phase is only detected if the current motion value $SAPD_{01}$ exceeds the previous motion value $SAPD_{12}$ multiplied by the pre-defined quantisation operator QM.

The subsequently calculated motion bits are applied to a FIFO sequence register. The sequence register has a depth of at least 5 bits.

In the following, a pattern analysis and mode determination will be described in detail.

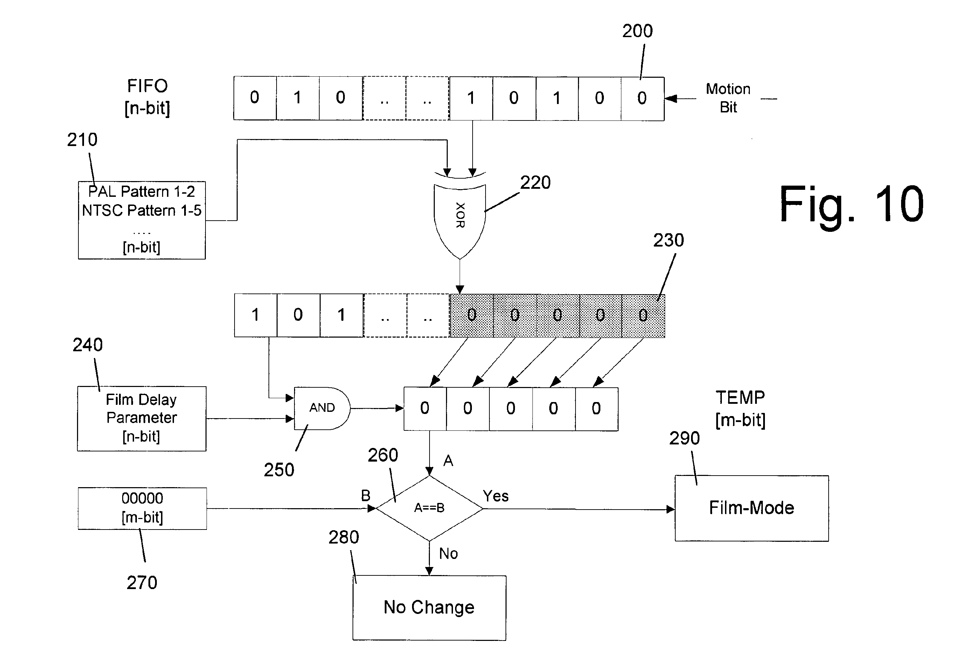

An example configuration of a film mode detector is illustrated in Fig. 10. A sequence of motion bits 200 stored in a FIFO sequence register, is compared to prestored motion patterns 210. The pre-stored motion patterns include at least two film mode patterns for PAL video data and at least 5 motion patterns for NTSC input data. They reflect all possible motion phases resulting from the telecine pull down process. The detected motion bit sequence is compared to the pre-stored patterns by X-OR means 220. Each matching bit is indicated by a 0 in the intermediate memory 230.

In order to avoid sudden changes in the film mode detection, a film mode detection delay is employed. For this purpose, a film delay parameter 240 is compared with the intermediate detection result 230.

The film delay parameter yields a binary one at positions in the intermediate memory that are required to match. Preferably these are the right most bits, having a dept of m bits. The left most bits are zero in the film delay parameter. The film delay is applied to the intermediate result by means of an AND 250. If the resulting signal TEMP and a binary zero of identical length 270 are signalled to be equal, through operator 260, then film mode is indicated 290. The m bits, masked out by the film delay, consequently correspond to one of the pre-stored patterns. Else if TEMP is non-zero (indicated by means of 260) then no telecine motion pattern is found and the current mode is maintained 280.

If the motion pattern is interrupted or destroyed, an immediate fall-back to video mode would result in an unstable impression to the viewer. As a switch to film mode is delayed by the above-described film mode determination, a single disturbance may interrupt a film mode detection for a particular block for a longer period of time.

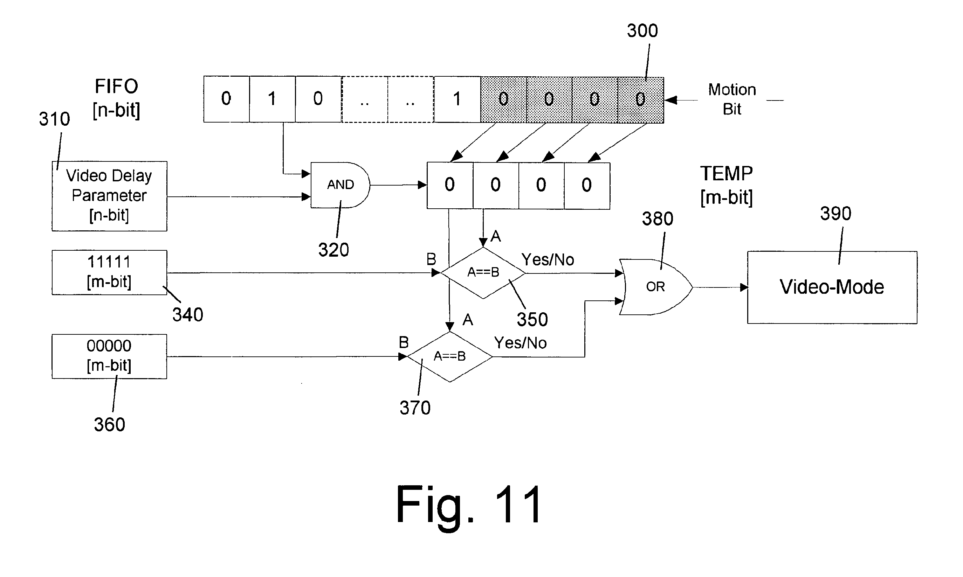

In order to avoid an erroneous video mode detection for a longer time, an additional video mode detection is provided. The configuration thereof is illustrated in Fig. 11.

The video delay parameter yields a binary one at positions in the intermediate memory that are required to match. Preferably these are the right most bits, having a dept of m bits. The left most bits are zero in the video delay parameter. The video delay is applied to the intermediate result by means of an AND 320. It can be determined by means of the equality operator 350, that the resulting signal TEMP is identical to m binary one's 340. This accounts for the fact of an accelerated video sequence. It can be further determined by means of the equality operator 370, that the resulting signal TEMP is consisting of all binary zero's 360. This accounts for the fact of a normal video sequence having a constant motion.

Both cases (where Yes is expressed by a logic one), combined by OR 380, set the video mode 390 for the current block.

As a video mode detection can be performed with higher reliability due to the continuous motion pattern to be detected, a video mode detection overrides a film mode detection. Also film mode image components being treated as video mode by the motion compensation have by far a better impression on the viewer, than vice versa.

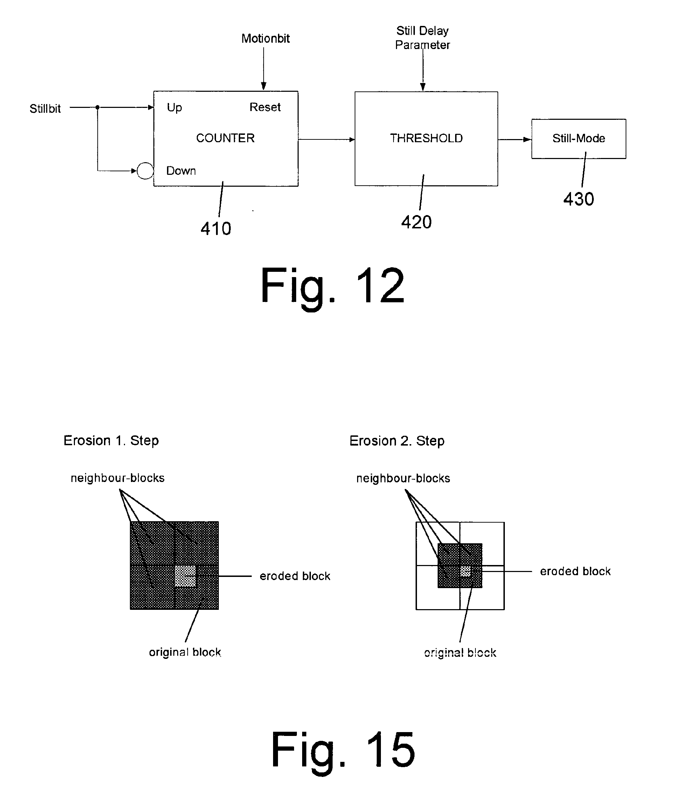

In order to enable a picture improvement processing if no motion can be detected between subsequent images, preferably a still mode determination is additionally performed. For this purpose, a still indicator is calculated. An example configuration of a still mode detector is illustrated in Fig. 12.

The motion value $SAPD_{02}$ represents a frame motion between fields N0 and N2. Such a frame motion value is calculated based on pixels at identical vertical pixel positions (in contrast to directly adjacent fields). Such a difference value does not contain any influence from a vertical offset due to the interlaced field structure. For determining the presence of no-motion, such a difference is preferably compared to a previous frame motion difference $SAPD_{13}$. However, due to memory restrictions generally only the two intermediate field motion values are available, namely motion values $SAPD_{01}$ and $SAPD_{12}$. To eliminate a contribution to the motion values SAPD from the field structure, the motion values $SAPD_{01}$ and $SAPD_{12}$ are subtracted to yield an equivalent of an intermediate frame motion.

In order to achieve a reliable and robust indication, the field difference calculated between motion values $SAPD_{01}$ and $SAPD_{12}$ is multiplied with a pre-determined quantisation operator QS. The still bit determination is accordingly performed in accordance with the following equation:

$$Stillbit = (SAPD_{02} < QS * |SAPD_{01} - SAPD_{12}|)$$

The pre-determined quantisation operator QS preferably has a value between 0 and 2 wherein the value should be set smaller than that of the above-mentioned quantisation operator QM. If the frame motion value is smaller than the threshold, a still image condition is determined and a still bit is set.

A still mode detection is based on the above determined still bit sequence which is evaluated by still mode detector, the configuration of which is illustrated in Fig. 12. The still bit increments a counter 410 if the still bit is set. Otherwise, counter 410 is decremented. When the count value exceeds a pre-determined threshold 420, still mode is detected and stored for the respective image area.

Based on the still mode detection result, a motion compensation and interpolation device can apply a re-interleaving of subsequent fields F0 and F1 in order to achieve an improved image quality based on a progressive image format.

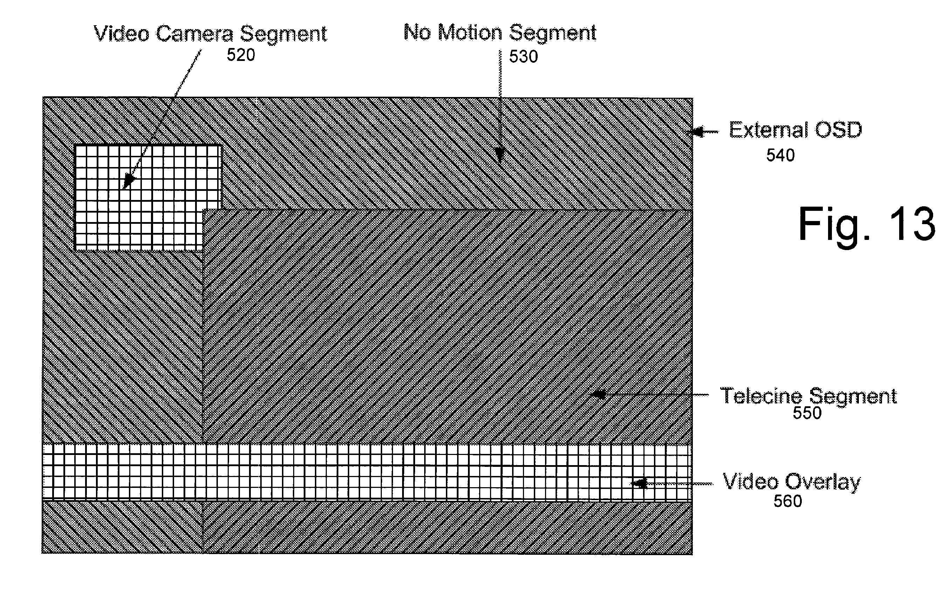

An example film mode detection result in accordance with the present invention for the input image shown in Fig. 4 is illustrated in Fig. 13. While the background 530 and the external OSD image data 540 are determined to include no motion and the telecine segment 550 is determined to stem from a motion picture to interlaced video conversion, the video camera segment 520 and the video overlay segment 560 are determined to be in video mode.

The determination results, i.e. the characteristics of each block are stored respectively as illustrated in Fig. 9a. For each block, a film mode indication (indicating either film mode or video mode), a motion phase indication, a motion register containing a sequence of motion bits 200 or 300 and a still mode indication are stored. These data are provided for a subsequent picture improvement processing.

The motion phase indication for a current image area is an important information for a motion compensation circuit, in particular in conjunction with up-conversion to an uneven multiple of the input frequency (e.g. when converting a 60 Hz image input frequency to a 72 Hz image output frequency). While the currently detected motion bit may be used to determine whether or not a motion phase is present, a reliable determination is preferably performed based on the currently detected motion pattern. Accordingly, for image sequences in PAL the last three bits are evaluated, while in NTSC the last four bits are taken into account. If both film modes are present in an image sequence, preferably the last five bits are evaluated in order to reliably distinguish 3-2 from 2-2 pull down. The current motion phase (i.e. the position in the pull down sequence) is of great importance for motion compensation, since a decision has to be made whether to compensate between two out of three fields F0, F1, F2.

If a current motion phase cannot be detected from the motion register, the current motion phase is determined from the last phase and wrapped around in accordance with the previously determined motion pattern.

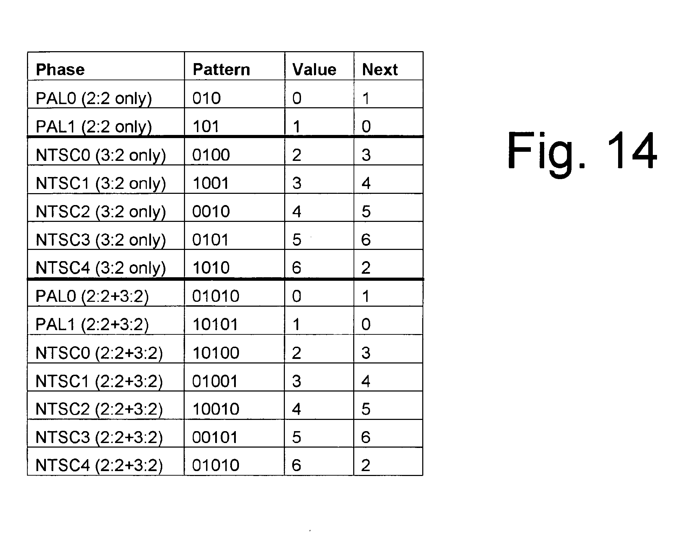

Fig. 14 lists motion pattern LUT for use in determining a current motion phase and the next phase if no pattern matches an entry.

For each image block the following data are stored in an internal memory area: the motion register, a film mode bit and phase value. The current film mode bit and a motion phase value are supplied to a motion estimation circuit. Motion estimation can make use of the phase e.g. to determine motion vectors only between fields with motion. Details of a motion estimation circuit are described, for instance, in EP-A-0 578 290.

After calculating a motion vector, the motion vector is forwarded to de-segmentation circuit 180 as illustrated in Fig. 5. The de-segmentation circuit 180 merges the motion vector with the film mode bit, still mode bit and the motion phase for the same image block. The de-segmentation is preferably performed by a two step erosion process. For this purpose, the vector components (x, y) are filtered in order to suppress wrong estimations. In a corresponding manner, the film mode bits are subjected to filtering.

Further, a two-step erosion process is applied, wherein in each step, a block is divided into 4 sub-blocks in order to double the resolution. Accordingly, the motion compensation circuit 120 is provided with a four times increased block resolution and with smoothened motion vector transitions. When utilizing the preferred block number of e.g. 90x60 for NTSC SD input resolution, the erosion has an output of 360x240, which has half the horizontal and half the vertical resolution of SD progressive output of 720x480.

Preferably, the motion vectors are separately filtered in horizontal and vertical directions using a 3-tap median. The film mode indications and the still mode indications are filtered accordingly first in horizontal, then in vertical direction. The filtering is performed by setting the centre value of three subsequent bits to the value of the two neighbouring bits if the neighbouring bits have identical values.

When applying an erosion processing to the film mode indications, the film mode indication of a new sub-block is determined based on all three neighbouring blocks if these blocks have an identical film mode indication. If the neighbouring blocks do not have the same film mode indication, the original film mode indication is not modified. The two step film mode indication erosion is illustrated in Fig. 15. The same erosion processing is applied to the still mode indications.

Returning to the motion compensation performed by motion compensation circuit 120 illustrated in Fig. 5, the motion compensator selects input image data based on the film mode indication, motion vector information and output block position. The image areas determined to be in film mode can be compensated by inverse telecine processing i. e. a re-interleaving by employing those fields having no motion in between. For this purpose, either fields F0 + F1 or fields F1 + F2 are employed.

Film can also be compensated using fields with motion between them and the corresponding motion vector. Depending on the output position of the frame to be generated, a part of the motion vector is used, related to the temporal input position. For example ½ of vector of F0 and ½ of vector of F1 if the frame rate conversion factor is 2.

If an input and output image relate to an identical temporal position, the field F0 can be employed unaltered and the image data of field F1 is forward interpolated respectively using the full length motion vector.

For image areas in video mode, those fields which are closest in temporal respect are employed for a motion vector based compensation in order to calculate an appropriate position of moving image objects.

The preferred embodiment illustrated in Fig. 5 processes a luminance signal Y. This luminance signal has a larger resolution than the colour components U and V in accordance with the CCIR-601 Recommendation. Alternatively, the film mode detection can be based on the image data of the colour component signals U and V, either in addition or instead of evaluating the luminance component in order to lower the hardware requirements. For processing RGB signals, a colour matrix which is well known in the art could be employed in advance.

The described pull down schemes are not limited to the above-mentioned 2-2 and 3-2 schemes. Any other pull down scheme p-q may be detected in a corresponding manner. For instance, a manga comic animation having a 4-4 ratio or a rather unusual 6-4 ratio can be likewise detected. For handling such motion patterns, the motion pattern register has to be adapted accordingly. The motion register length for each image area has to be set to at least p+q bits. In addition, a new motion phase value look-up table has to be shared with the motion compensation circuit in order to be able to initiate a respective input field correlation.

According to a further alternative, an edge detector and a respective storage means are implemented in the image segmentation unit. The edge detector serves for identifying border lines of separate image objects. The pixel values are then supplied to the SAPD circuit individually for each image object. The image characteristics are correspondingly calculated and processed on an image object basis.

Summarizing, the present invention enables to determine a film mode characteristic for individual image areas in order to appropriately reflect local image characteristics. By detecting the image characteristics on a local basis, a picture improvement processing achieves better results as artefacts due to the application of a wrong global improvement processing are avoided.

**Claims**

1. A method for detecting film mode for an image area of a current image in a sequence of video images
   **characterized in that**
   said current image comprising a plurality of image areas and said film mode detection being performed for each of said image areas individually.

2. A method according to claim 1, wherein said images of said video sequence being divided into a plurality of blocks and said film mode detection being performed on a block basis.

3. A method according to claim 2, wherein the block structure employed for film mode detection corresponds to a block structure used for motion estimation.

4. A method according to claim 2 or 3, wherein said film mode detection being performed for an image area comprising the current block and a predefined portion of neighbouring blocks.

5. A method according to claim 4, wherein the block size employed for film mode detection being twice as large as the block size used for motion estimation.

6. A method according to any of claims 2 to 5, wherein said video sequence being an interlaced video sequence and the block size in horizontal direction being twice as large as in vertical direction.

**7.** A method according to any of claims 1 to 6, wherein said film mode detection being based on motion detection.

**8.** A method according to claim 7, wherein said motion detection being based on a calculation of pixel differences.

**9.** A method according to claim 8, wherein motion being detected when the accumulated pixel differences exceed a predefined threshold.

**10.** A method according to claim 9, wherein said predefined threshold being variable.

**11.** A method according to claim 10, wherein said predefined threshold being set in accordance with the size of a previously determined accumulated pixel difference.

**12.** A method according to claim 11, wherein said threshold being set by multiplying said previously determined accumulated pixel difference with a predetermined coefficient value (QM).

**13.** A method according to any of claims 1 to 12, wherein said film mode detection is based on image data from the current image and the previous image.

**14.** A method according to any of claims 1 to 12, wherein said film mode detection is based on image data from the current image and the two previous images.

**15.** A method according to any of claims 1 to 14, further comprising the step of detecting a particular motion pattern from a plurality of predetermined motion patterns.

**16.** A method according to claim 15, wherein said motion pattern being a 2:2 or 3:2 motion picture to interlaced conversion pattern.

**17.** A method according to any of claims 1 to 16, wherein a switching to and from a film mode determination is only performed if a new mode is detected for a predefined number of times.

**18.** A method according to any of claims 1 to 16, wherein a switch to film mode is only performed if film mode is detected for a predefined number of times.

**19.** A method according to any of claims 1 to 18, further comprising the step of storing the determination result.

**20.** A method according to claim 19, wherein a detection result and a motion pattern being stored for each block of the current image.

**21.** A method according to claim 20, wherein said motion pattern including the indication of a motion picture to interlaced conversion pattern.

**22.** A method according to any of claims 1 to 21, wherein said video sequence being an interlaced video sequence and said method further comprising the step of subjecting the image data to filtering in vertical direction before performing film mode detection.

**23.** A method according to any of claims 1 to 22, further comprising the steps of:

determining whether or not video mode is detected for the current image area, and

determining the mode of the current image area to be video mode by prioritizing a video mode determination over a film mode determination for said image area if video mode and film mode have been detected for said image area.

**24.** A method according to claim 23, wherein said video mode determination being based on a detection of a continuous motion pattern for said image area and a predetermined number of image areas at corresponding positions in previous images.

**25.** A method according to claim 23 or 24, wherein said film mode determination being based on the detection of one of plurality of predetermined motion patterns for said image area and a predetermined number of image areas at corresponding positions in previous images.

26. A method according to claim 24 or 25, wherein said motion pattern indicating a motion phase of the current image area together with a motion phase scheme.

27. A method according to claim 26, wherein said motion phase scheme indicating a particular pulldown scheme.

28. A method according to any of claims 24 to 27, wherein said motion pattern being a sequence of binary values.

29. A method according to claim 28, wherein said motion patterns for detecting a 2:2 pulldown being three bit values.

30. A method according to claim 28, wherein said motion pattern for detecting a 3:2 pulldown being five bit values.

31. A method according to any of claims 24 to 30, further comprising the steps of:

   determining whether or not said motion pattern determination fails for the current image area, and
   if said motion pattern determination fails, calculating the current motion phase from the previously determined corresponding motion pattern.

32. A method according to any of claims 1 to 31, further comprising the steps of:

   determining whether still mode is detected for the current image area, and

   indicating a detection of still mode for the current image area.

33. A method according to claim 32, wherein said still mode being detected if motion detection fails for the current image area and a predetermined number of image areas in previous images.

34. A method for motion compensation comprising the steps of:

   detecting film mode for a current image area in accordance with any of claims 1 to 33, and

   selecting a motion compensation scheme to be performed in accordance with the film mode detection result.

35. A method according to claim 34, wherein said motion compensation schemes include at least one of inverse telecine of film mode image data, motion vector based interpolation of film mode data and re-interleaving of video mode image data.

36. A film mode detector for detecting film mode for an image area of a current image in a sequence of video images **characterized in that** said image area being a portion of said current image and said film mode detection being performed for said image area.

37. A film mode detector according to claim 36, wherein said images of said video sequence being divided into a plurality of blocks and said film mode detection being performed on a block basis.

38. A film mode detector according to claim 37, wherein the block structure employed for film mode detection corresponds to a block structure used for motion estimation.

39. A film mode detector according to claim 37 or 38, wherein said film mode detection being performed for an image area comprising the current block and a predefined portion of neighbouring blocks.

40. A film mode detector according to claim 39, wherein the block size employed for film mode detection being twice as large as the block size used for motion estimation.

41. A film mode detector according to any of claims 37 to 40, wherein said video sequence being an interlaced video sequence and the block size in horizontal direction being twice as large as in vertical direction.

**42.** A film mode detector according to any of claims 36 to 41, comprising a motion detector.

**43.** A film mode detector according to claim 42, said motion detector comprising an accumulator for accumulating pixel differences.

**44.** A film mode detector according to claim 43, said motion detector comprising a comparator for comparing the accumulated pixel differences with a predefined threshold.

**45.** A film mode detector according to claim 44, wherein said predefined threshold being variable.

**46.** A film mode detector according to claim 45, further comprising a threshold setter for setting said predefined threshold in accordance with the size of a previously determined accumulated pixel difference.

**47.** A film mode detector according to claim 46, wherein said threshold setter setting said threshold by multiplying said previously determined accumulated pixel difference with a predetermined coefficient value (QM).

**48.** A film mode detector according to any of claims 36 to 47, adapted to receive image data from the current image and the previous image.

**49.** A film mode detector according to any of claims 36 to 47, adapted to receive image data from the current image and the two previous images.

**50.** A film mode detector according to any of claims 36 to 49, further comprising:

a memory for storing a plurality of predetermined motion patterns, and

a pattern detector for detecting a particular motion pattern from said plurality of stored motion patterns.

**51.** A film mode detector according to claim 50, wherein said motion pattern being a 2:2 or 3:2 motion picture to interlaced conversion pattern.

**52.** A film mode detector according to any of claims 36 to 51, further comprising:

a counter for counting a subsequent identical film mode detection result,

a comparator for comparing a current count value to a predetermined value, and

film mode determining means for switching to and from a film mode determination if a new mode is detected for a predefined number of times.

**53.** A film mode detector according to any of claims 36 to 51, further comprising:

a counter for counting a subsequent identical film mode detection result,

a comparator for comparing a current count value to a predetermined value, and

film mode determining means for switching to a film mode determination if a film mode is detected for a predefined number of times.

**54.** A film mode detector according to any of claims 36 to 53, further comprising a memory for storing the determination result.

**55.** A film mode detector according to claim 54, wherein said memory storing a detection result and a motion pattern for each block of the current image.

**56.** A film mode detector according to claim 55, wherein said motion pattern including the indication of a motion picture to interlaced conversion pattern.

**57.** A film mode detector according to any of claims 36 to 56, wherein said video sequence being an interlaced video sequence and said film mode detector further comprising filter means for filtering the image data in vertical direction before performing film mode detection.

**58.** A film mode detector according to any of claims 36 to 57, further comprising:

a video mode detector for determining whether or not video mode is detected for the current image area, and

a mode detector for determining the mode of the current image area to be video mode by prioritizing a video mode determination over a film mode determination for said image area if video mode and film mode have been detected for said image area.

**59.** A film mode detector according to claim 58, wherein said video mode detector determining video mode based on a detection of a continuous motion pattern for said image area and a predetermined number of image areas at corresponding positions in previous images.

**60.** A film mode detector according to claim 58 or 59, wherein said film mode determination being based on the detection of one of plurality of prestored motion patterns for said image area and a predetermined number of image areas at corresponding positions in previous images.

**61.** A film mode detector according to claim 59 or 60, wherein said motion pattern indicating a motion phase of the current image area together with a motion phase scheme.

**62.** A film mode detector according to claim 61, wherein said motion phase scheme indicating a particular pulldown scheme.

**63.** A film mode detector according to any of claims 59 to 62, wherein said motion pattern being a sequence of binary values.

**64.** A film mode detector according to claim 63, wherein said motion patterns for detecting a 2:2 pulldown being three bit values.

**65.** A film mode detector according to claim 63, wherein said motion pattern for detecting a 3:2 pulldown being five bit values.

**66.** A film mode detector according to any of claims 59 to 65, further comprising:

a motion detection failure detector for determining whether or not said motion pattern determination fails for the current image area, and

a calculator for calculating the current motion phase from the previously determined corresponding motion pattern if said motion pattern determination fails.

**67.** A film mode detector according to any of claims 36 to 66, further comprising:

a still mode detector for determining whether still mode is detected for the current image area, and

output means for indicating a detection of still mode for the current image area.

**68.** A film mode detector according to claim 67, wherein said still mode detector detecting said still mode if motion detection fails for the current image area and a predetermined number of image areas in previous images.

**69.** A motion compensator comprising:

a film mode detector in accordance with any of claims 36 to 68, and

a selector for selecting a motion compensation scheme to be performed in accordance with the film mode detection result.

**70.** A motion compensator according to claim 69, wherein said motion compensation schemes include at least one of inverse telecine of film mode image data, motion vector based interpolation of film mode data and re-interleaving of video mode image data.

**Amended claims in accordance with Rule 86(2) EPC.**

**1.** A method for detecting film mode for a block of a current image in a sequence of video images, wherein said images of said video sequence being divided into a plurality of blocks and said film mode detection being performed for each of said blocks individually
**characterized in that**
the block size employed for film mode detection being twice as large as the block size used for motion estimation.

**2.** A method according to claim 2, wherein said video sequence being an interlaced video sequence and the block size in horizontal direction being twice as large as in vertical direction.

**3.** A method according claim 1 or 2, wherein said film mode detection being based on motion detection.

**4.** A method according to claim 3, wherein said motion detection being based on a calculation of pixel differences.

**5.** A method according to claim 4, wherein motion being detected when the accumulated pixel differences exceed a predefined threshold.

**6.** A method according to claim 59, wherein said predefined threshold being variable.

**7.** A method according to claim 6, wherein said predefined threshold being set in accordance with the size of a previously determined accumulated pixel difference.

**8.** A method according to claim 7, wherein said threshold being set by multiplying said previously determined accumulated pixel difference with a predetermined coefficient value (QM).

**9.** A method according to any of claims 1 to 8, wherein said film mode detection is based on image data from the current image and the previous image.

**10.** A method according to any of claims 1 to 8, wherein said film mode detection is based on image data from the current image and the two previous images.

**11.** A method according to any of claims 1 to 10, further comprising the step of detecting a particular motion pattern from a plurality of predetermined motion patterns.

**12.** A method according to claim 11, wherein said motion pattern being a 2:2 or 3:2 motion picture to interlaced conversion pattern.

**13.** A method according to any of claims 1 to 12, wherein a switching to and from a film mode determination is only performed if a new mode is detected for a predefined number of times.

**14.** A method according to any of claims 1 to 12, wherein a switch to film mode is only performed if film mode is detected for a predefined number of times.

**15.** A method according to any of claims 1 to 14, further comprising the step of storing the determination result.

**16.** A method according to claim 15, wherein a detection result and a motion pattern being stored for each block of the current image.

**17.** A method according to claim 16, wherein said motion pattern including the indication of a motion picture to interlaced conversion pattern.

**18.** A method according to any of claims 1 to 27, wherein said video sequence being an interlaced video sequence and said method further comprising the step of subjecting the image data to filtering in vertical direction before performing film mode detection.

**19.** A method according to any of claims 1 to 18, further comprising the steps of:

determining whether or not video mode is detected for the current block, and

determining the mode of the current block to be video mode by prioritizing a video mode determination over a film mode determination for said block if video mode and film mode have been detected for said block.

**20.** A method according to claim 19, wherein said video mode determination being based on a detection of a continuous motion pattern for said block and a predetermined number of blocks at corresponding positions in previous images.

**21.** A method according to claim 19 or 20, wherein said film mode determination being based on the detection of one of plurality of predetermined motion patterns for said block and a predetermined number of blocks at corresponding positions in previous images.

**22.** A method according to claim 20 or 21, wherein said motion pattern indicating a motion phase of the current block together with a motion phase scheme.

**23.** A method according to claim 22, wherein said motion phase scheme indicating a particular pulldown scheme.

**24.** A method according to any of claims 20 to 23, wherein said motion pattern being a sequence of binary values.

**25.** A method according to claim 24, wherein said motion patterns for detecting a 2:2 pulldown being three bit values.

**26.** A method according to claim 24, wherein said motion pattern for detecting a 3:2 pulldown being five bit values.

**27.** A method according to any of claims 20 to 26, further comprising the steps of:

determining whether or not said motion pattern determination fails for the current block, and

if said motion pattern determination fails, calculating the current motion phase from the previously determined corresponding motion pattern.

**28.** A method according to any of claims 1 to 27, further comprising the steps of:

determining whether still mode is detected for the current block, and

indicating a detection of still mode for the current block.

**29.** A method according to claim 28, wherein said still mode being detected if motion detection fails for the current block and a predetermined number of blocks in previous images.

**30.** A method for motion compensation comprising the steps of:

detecting film mode for a current block a in accordance with any of claims 1 to 29, and

selecting a motion compensation scheme to be performed in accordance with the film mode detection result.

**31.** A method according to claim 30, wherein said motion compensation schemes include at least one of inverse telecine of film mode image data, motion vector based interpolation of film mode data and re-interleaving of video mode image data.

**32.** A film mode detector for detecting film mode for a block of a current image in a sequence of video images, wherein said images of said video sequence being divided into a plurality of blocks and said film mode detection being performed for each of said blocks individually

**characterized in that**
the block size employed for film mode detection being twice as large as the block size used for motion estimation.

**33.** A film mode detector according to claim 32, wherein said video sequence being an interlaced video sequence and the block size in horizontal direction being twice as large as in vertical direction.

**34.** A film mode detector according to claims 32 or 33, comprising a motion detector.

**35.** A film mode detector according to claim 34, said motion detector comprising an accumulator for accumulating pixel differences.

**36.** A film mode detector according to claim 35, said motion detector comprising a comparator for comparing the accumulated pixel differences with a predefined threshold.

**37.** A film mode detector according to claim 36, wherein said predefined threshold being variable.

**38.** A film mode detector according to claim 37, further comprising a threshold setter for setting said predefined threshold in accordance with the size of a previously determined accumulated pixel difference.

**39.** A film mode detector according to claim 38, wherein said threshold setter setting said threshold by multiplying said previously determined accumulated pixel difference with a predetermined coefficient value (QM).

**40.** A film mode detector according to any of claims 32 to 39, adapted to receive image data from the current image and the previous image.

**41.** A film mode detector according to any of claims 32 to 39, adapted to receive image data from the current image and the two previous images.

**42.** A film mode detector according to any of claims 32 to 41, further comprising:

a memory for storing a plurality of predetermined motion patterns, and

a pattern detector for detecting a particular motion pattern from said plurality of stored motion patterns.

**43.** A film mode detector according to claim 42, wherein said motion pattern being a 2:2 or 3:2 motion picture to interlaced conversion pattern.

**44.** A film mode detector according to any of claims 32 to 43, further comprising:

a counter for counting a subsequent identical film mode detection result,

a comparator for comparing a current count value to a predetermined value, and

film mode determining means for switching to and from a film mode determination if a new mode is detected for a predefined number of times.

**45.** A film mode detector according to any of claims 32 to 43, further comprising:

a counter for counting a subsequent identical film mode detection result,

a comparator for comparing a current count value to a predetermined value, and

film mode determining means for switching to a film mode determination if a film mode is detected for a predefined number of times.

**46.** A film mode detector according to any of claims 32 to 45, further comprising a memory for storing the determination result.

**47.** A film mode detector according to claim 46, wherein said memory storing a detection result and a motion pattern for each block of the current image.

**48.** A film mode detector according to claim 47, wherein said motion pattern including the indication of a motion picture to interlaced conversion pattern.

**49.** A film mode detector according to any of claims 32 to 48, wherein said video sequence being an interlaced video sequence and said film mode detector further comprising filter means for filtering the image data in vertical direction before performing film mode detection.

**50.** A film mode detector according to any of claims 32 to 49, further comprising:

a video mode detector for determining whether or not video mode is detected for the current block, and
a mode detector for determining the mode of the current block to be video mode by prioritizing a video mode determination over a film mode determination for said block if video mode and film mode have been detected for said block.

**51.** A film mode detector according to claim 50, wherein said video mode detector determining video mode based on a detection of a continuous motion pattern for said block and a predetermined number of blocks at corresponding positions in previous images.

**52.** A film mode detector according to claim 50 or 51, wherein said film mode determination being based on the detection of one of plurality of prestored motion patterns for said block and a predetermined number of blocks at corresponding positions in previous images.

**53.** A film mode detector according to claim 51 or 52, wherein said motion pattern indicating a motion phase of the current block together with a motion phase scheme.

**54.** A film mode detector according to claim 53, wherein said motion phase scheme indicating a particular pulldown scheme.

**55.** A film mode detector according to any of claims 51 to 54, wherein said motion pattern being a sequence of binary values.

**56.** A film mode detector according to claim 55, wherein said motion patterns for detecting a 2:2 pulldown being three bit values.

**57.** A film mode detector according to claim 55, wherein said motion pattern for detecting a 3:2 pulldown being five bit values.

**58.** A film mode detector according to any of claims 51 to 57, further comprising:

a motion detection failure detector for determining whether or not said motion pattern determination fails for the current block, and

a calculator for calculating the current motion phase from the previously determined corresponding motion pattern if said motion pattern determination fails.

**59.** A film mode detector according to any of claims 32 to 58, further comprising:

a still mode detector for determining whether still mode is detected for the current block, and

output means for indicating a detection of still mode for the current block.

**60.** A film mode detector according to claim 59, wherein said still mode detector detecting said still mode if motion detection fails for the current block and a predetermined number of blocks in previous images.

**61.** A motion compensator comprising:

a film mode detector in accordance with any of claims 32 to 60, and

a selector for selecting a motion compensation scheme to be performed in accordance with the film mode detection result.

**62.** A motion compensator according to claim 61, wherein said motion compensation schemes include at least one of inverse telecine of film mode image data, motion vector based interpolation of film mode data and re-interleaving of video mode image data.

# Fig. 1

Fig. 2

Fig. 3

Fig. 4

Fig. 5

# Fig. 6

F0  F1  F2

# Fig. 7

Fig. 8

a)

Block Memory:

Film-mode 0/1

Motion-Phase 0-6

Motion-Register[16]

Still-mode 0/1

b)

Block = m x n Pixels

Wide Block = 2*m x 2*n Pixels

# Fig. 9

Fig. 10

Fig. 11

EP 1 592 250 A1

Motionbit

Still Delay
Parameter

Stillbit

Up          Reset

COUNTER          →          THRESHOLD          →          Still-Mode

Down

410          420          430

# Fig. 12

Erosion 1. Step

neighbour-blocks

eroded block

original block

Erosion 2. Step

neighbour-blocks

eroded block

original block

# Fig. 15

Video Camera Segment
520

No Motion Segment
530

External OSD
540

Fig. 13

Telecine Segment
550

Video Overlay
560

EP 1 592 250 A1

| Phase | Pattern | Value | Next |
|---|---|---|---|
| PAL0 (2:2 only) | 010 | 0 | 1 |
| PAL1 (2:2 only) | 101 | 1 | 0 |
| NTSC0 (3:2 only) | 0100 | 2 | 3 |
| NTSC1 (3:2 only) | 1001 | 3 | 4 |
| NTSC2 (3:2 only) | 0010 | 4 | 5 |
| NTSC3 (3:2 only) | 0101 | 5 | 6 |
| NTSC4 (3:2 only) | 1010 | 6 | 2 |
| PAL0 (2:2+3:2) | 01010 | 0 | 1 |
| PAL1 (2:2+3:2) | 10101 | 1 | 0 |
| NTSC0 (2:2+3:2) | 10100 | 2 | 3 |
| NTSC1 (2:2+3:2) | 01001 | 3 | 4 |
| NTSC2 (2:2+3:2) | 10010 | 4 | 5 |
| NTSC3 (2:2+3:2) | 00101 | 5 | 6 |
| NTSC4 (2:2+3:2) | 01010 | 6 | 2 |

# Fig. 14

31

**European Patent Office**

# EUROPEAN SEARCH REPORT

Application Number

EP 04 01 0301

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/026328 A1 (DEL CORSON) 4 October 2001 (2001-10-04) | 1,2,4, 36,37,39 | H04N7/01 |
| Y | * abstract * | 23-27, 58-62 | |
| A | * page 2, paragraphs '0031!, '0034! to '0036! * * page 3, paragraph '0052!, to page 4, paragraph '0059! * | 3,5,6, 38,40,41 | |
| X | WO 99/16251 A (KONINKLIJKE PHILIPS ELECTRONICS) 1 April 1999 (1999-04-01) | 1-3,6, 36-38,41 | |
| A | * page 10, line 19 - line 28 * * page 22, line 9 - line 21 * | 4,5,39, 40 | |
| X | WO 02/056597 A (KONINKLIJKE PHILIPS ELECTRONICS) 18 July 2002 (2002-07-18) * abstract * * page 1, line 3 - line 4 * | 1,36 | |
| Y | EP 0 720 366 A (THOMSON CONSUMER ELECTRONICS) 3 July 1996 (1996-07-03) | 23-27, 58-62 | TECHNICAL FIELDS SEARCHED (Int.Cl.7) |
| A | * abstract; figures 3,4 * * page 2, line 19 - line 43 * * page 5, line 52 - page 7, line 17 * | 28-31, 63-66 | H04N |

The present search report has been drawn up for all claims

| Place of search | Date of completion of the search | Examiner |
|---|---|---|
| The Hague | 8 December 2004 | Berwitz, P |

European Patent

Office

Application Number

EP 04 01 0301

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-70

☐ None of the further search fees have been paid within the fixed time limit. The present European search report has been drawn up for those parts of the European patent application which relate to the invention first mentioned in the claims, namely claims:

The Search Division considers that the present European patent application does not comply with the requirements of unity of invention and relates to several inventions or groups of inventions, namely:

    1. claims: 1-70

            Block based film mode detection
            ---

    2. claims: 1, 7-36, 42-70

            Motion detection based film mode detection
            ---

    3. claims: 1, 17- 36, 52-70

            Conditions for determining a film mode
            ---

    4. claims: 1, 19-36, 54-70

            Storage of film mode determination results
            ---

    5. claims: 1, 22-36, 57-70

            Image pre-filtering
            ---

    6. claims: 1, 23-36, 58-70

            Video mode detection. Prioritization of modes.
            ---

    7. claims: 1, 32, 33, 36, 67, 68

            Still mode detection
            ---

    8. claims: 1, 34-36, 69, 70

            Motion compensation
            ---

**ANNEX TO THE EUROPEAN SEARCH REPORT
ON EUROPEAN PATENT APPLICATION NO.**

EP 04 01 0301

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2004

| Patent document cited in search report | | Publication date | Patent family member(s) | | Publication date |
|---|---|---|---|---|---|
| US 2001026328 | A1 | 04-10-2001 | WO | 0165857 A1 | 07-09-2001 |
| | | | EP | 1183873 A1 | 06-03-2002 |
| | | | JP | 2003525548 T | 26-08-2003 |
| WO 9916251 | A | 01-04-1999 | EP | 0940041 A1 | 08-09-1999 |
| | | | EP | 0943209 A1 | 22-09-1999 |
| | | | WO | 9916251 A1 | 01-04-1999 |
| | | | WO | 9916248 A1 | 01-04-1999 |
| | | | JP | 2001506472 T | 15-05-2001 |
| | | | JP | 2001506473 T | 15-05-2001 |
| | | | US | 6385245 B1 | 07-05-2002 |
| WO 02056597 | A | 18-07-2002 | CN | 1456015 T | 12-11-2003 |
| | | | EP | 1352528 A1 | 15-10-2003 |
| | | | WO | 02056597 A1 | 18-07-2002 |
| | | | JP | 2004518341 T | 17-06-2004 |
| | | | US | 2002131499 A1 | 19-09-2002 |
| EP 0720366 | A | 03-07-1996 | US | 5563651 A | 08-10-1996 |
| | | | CN | 1132437 A ,B | 02-10-1996 |
| | | | DE | 69514771 D1 | 02-03-2000 |
| | | | DE | 69514771 T2 | 16-11-2000 |
| | | | EP | 0720366 A2 | 03-07-1996 |
| | | | ES | 2141882 T3 | 01-04-2000 |
| | | | JP | 9018784 A | 17-01-1997 |
| | | | PT | 720366 T | 31-07-2000 |
| | | | SG | 50388 A1 | 20-07-1998 |

EPO FORM P0459

For more details about this annex : see Official Journal of the European Patent Office, No. 12/82